# EUROPEAN PATENT SPECIFICATION

(11) **EP 3 263 967 B1**
(45) Date of publication and mention of the grant of the patent: **30.01.2019**
(21) Application number: 17178533.0
(22) Date of filing: 28.06.2017
(51) Int. Cl.: F16M 11/08, F16M 11/20, F16M 11/24

(54) **ARTICULATED SUPPORT ARM**
GELENKSTÜTZARM
BRAS MÉCANIQUE ARTICULÉ

(30) Priority: 29.06.2016 IT UA20164721
(43) Date of publication of application: 03.01.2018
(73) Proprietor: EURO INOX QUALITY SRL, 36015 Schio Vicenza (IT)
(72) Inventor: LUCIETTO, UMBERTO, 36015 SCHIO Vicenza (IT)
(74) Representative: Maroscia, Antonio

(56) References cited:
- EP-A1- 0 099 809
- WO-A1-2010/074564
- CA-A1- 2 270 580
- US-A1- 2003 085 639
- US-A1- 2013 168 511

## Description

### Field of the invention

The present invention generally finds application in the field of mechanical coupling systems, and particularly relates to an articulated support arm for machines or industrial and/or sanitary apparatuses.

### Background art

Articulated support arms have been long known to be adapted to be coupled to machines of various types for supporting loads such as control panels, displays or the like, electrically connected to the machine.

Particularly, these arms are pivotally coupled to the machine and the load and allow the latter to be lifted or lowered relative to the operator.

Nevertheless, a drawback of such arrangements is that these arms do not move smoothly when heavy or bulky loads are being handled.

A further drawback is that the mechanical parts of the machine require periodic maintenance, and the machine must be shut down during maintenance.

In view of at least partially obviating these drawbacks, articulated arms have been developed, which comprise gas springs having a predetermined calibration, and adapted to ensure stable load support and smoother arm movement.

US 2007228230 discloses a support arm having an adjustable elevation, with respective ends coupled to a machine and a control panel by swivel joints and pivot pins to form a four-bar linkage.

The movement of the panel relative to the machine is provided by a gas spring having a sleeve pivoted on one element of the arm frame and a stem that is adapted to slide within the sleeve and has a free end pivoted to another element of the arm frame.

Furthermore, the electrical connection cables are accommodated within the arm frame and extend through the joints for connection with the machine and the control panel.

A first drawback of such arrangements is that these arms can only support control panels whose weigh falls within a predetermined range.

Thus, when the control arm has to be replaced with a heavier one, the arm must be also replaced, which makes this arrangement particularly expensive.

Alternatively, the gas spring must be recalibrated to withstand heavier loads, which will require the machine to be used by highly skilled personnel and will further increase the overall working time.

A further drawback is that the electrical cables connecting the machine and the control panel are accommodated within the frame with the other arm parts, and are thus not easily accessed by an operator.

Another drawback of this solution is that such arms require periodic maintenance to ensure constant smooth movement and that the movement locking and unlocking systems have poor accuracy.

WO2010/074564 disclose a system for supporting an electronic board comprising two elongate sections articulated on two end supports to define a four-bar linkage. Furthermore, the system comprises a gas spring and an electromechanical actuator coupled to one of the sections and one of the supports to adjust the height of the four-bar linkage and the movements of the sections.

Nevertheless, this support system does not ensure long-lasting smooth movement of the electronic board, has a very large size and requires very complex assembly and disassembly procedures.

### Technical Problem

In the light of the prior art, the technical problem addressed by the present invention consists in providing an articulated support arm for machines that can be used with loads having different weights and sizes and ensures constant smooth movement over time.

### Disclosure of the invention

The object of the present invention is to solve the above mentioned problem, by providing an articulated support arm for machines that is highly efficient and relatively cost-effective.

A particular object of the present invention is to provide an articulated support arm for machines that can be used to support a plurality of control panels or similar devices having different weights and sizes.

A further object of the present invention is to provide an articulated support arm for machines that ensures constant smooth movement over time.

Another object of the present invention is to provide an articulated support arm for machines whose mechanical parts have low maintenance requirements.

A further object of the present invention is to provide an articulated support arm for machines that ensures constant high positioning accuracy over time.

Another object of the present invention is to provide an articulated support arm for machines that can be easily controlled by an operator.

A further object of the present invention is to provide an articulated support arm that facilitates access to electrical connections between the machine and the control panel by an operator.

The above mentioned and other objects, as better explained hereafter, are fulfilled by an articulated support arm for machines or industrial and/or sanitary apparatuses as defined in claim 1, which comprises an elongate frame having longitudinal ends coupled to a machine or a control panel or similar device respectively, a pair of parallel sections, adapted to form the frame and articulated to respective end supports at pivot points to define a four-bar linkage.

There are further provided a swivel joint, fixed to one end of each support and a gas spring, housed in the frame and interposed between the sections and the supports to at least partially balance the weight of the control panel and assist in lifting the arm.

The arm also comprises an electromechanical actuator with respective ends connected to the sections to control rotation thereof about the pivot points, and control means are provided for the user to control the lifting and lowering movements of the arm.

Advantageous embodiments of the invention are obtained in accordance with the dependent claims.

### Brief description of the drawings

Further features and advantages of the invention will be more apparent from the detailed description of a preferred, non-exclusive embodiment of an articulated support arm for machines according to the invention, which is described as a non-limiting example with the help of the annexed drawings, in which:
FIG. 1 is a perspective view of the articulated arm of the invention;
FIG. 2 is a lateral broken-away view of the articulated arm of Fig. 1 in a first operating position;
FIG. 3 is a lateral broken-away view of the articulated arm of Fig. 1 in a second operating position;
FIG. 4 is an exploded perspective view of the arm of Fig. 1.

### Detailed description of a preferred exemplary embodiment

Particularly referring to the figures, there is shown an articulated support arm, generally designated by numeral 1, for machines or industrial and/or sanitary apparatuses.

Namely, the arm 1 can be used to removably couple a predetermined load C to the machine M, e.g. a control panel, a display or other similar devices.

By way of example, the machine M may be a CNC machine tool or a diagnostic or biomedical apparatus, without departure from the scope of the invention.

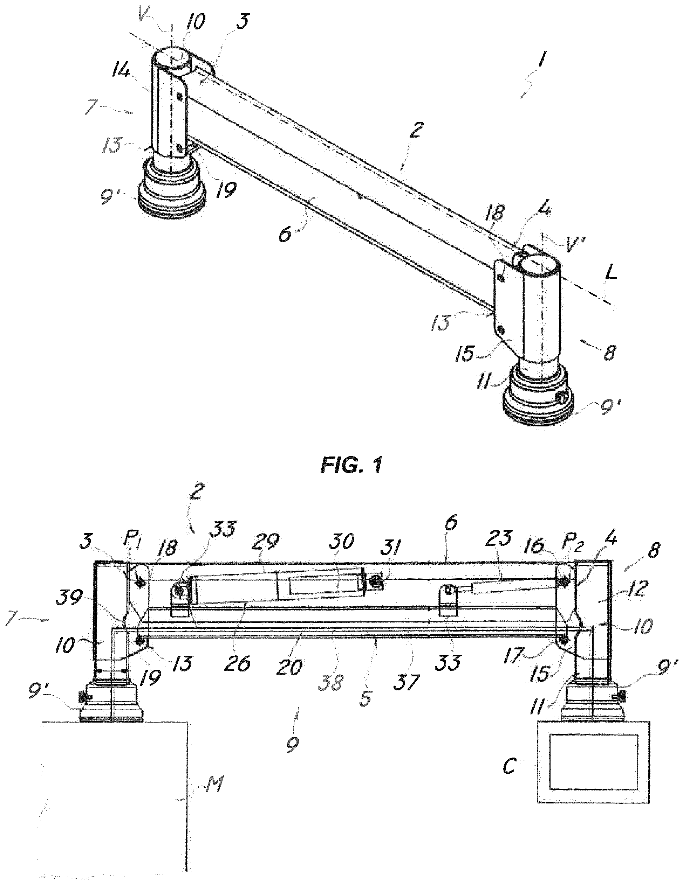

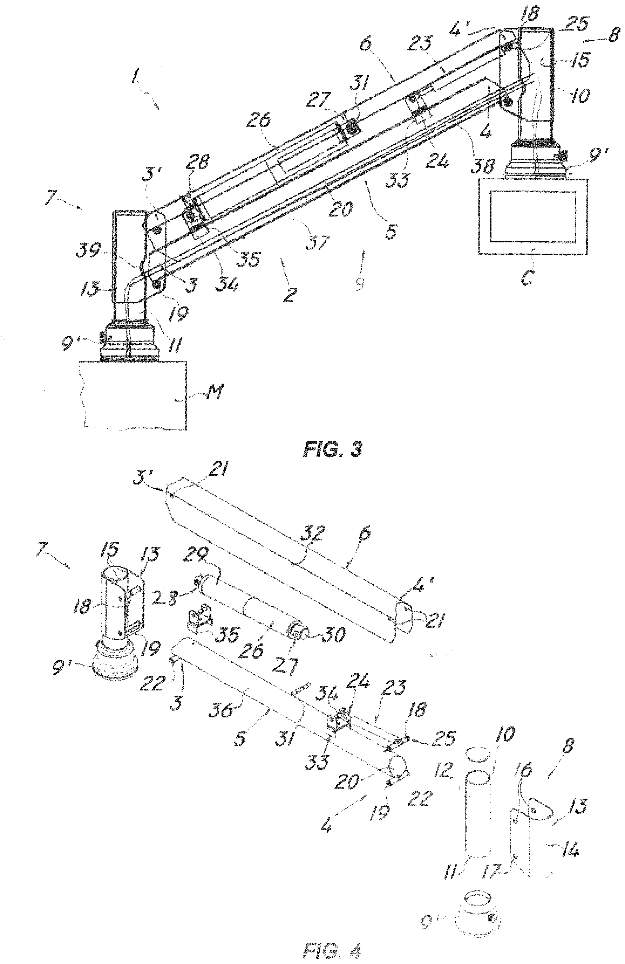

According to a preferred embodiment of the invention, the arm 1 comprises an elongate frame 2 which defines a longitudinal axis L and has longitudinal ends 3, 4 coupled to the machine M and the control panel C respectively, as schematically depicted in FIGS. 2 and 3, to allow the panel to move relative to the machine M.

The elongate frame 2 comprises a pair of substantially parallel sections 5, 6, articulated to respective end supports 7, 8 at predetermined pivot points P₁, P₂ to define a four-bar linkage 9.

The supports 7, 8 are in turn connected to the machine M and the control panel C by means of respective swivel joints 9' which have one end of the supports 7, 8 fixed thereto for the arm 1 to pivot about a corresponding vertical axis V, V'.

Each of the end supports 7, 8 comprises a tubular body 10 having one end 11 permanently fitted in opening A of a respective swivel joint 9'.

A U-shaped bracket 13, as best shown in FIG. 4, may partially encircle and be fixed to the portion 12 of each tubular body 10 that is not fitted in the joint 9'.

As shown in the figures, each U-shaped bracket 13 comprises a substantially semicircular portion 14 for housing the respective tubular body 10 and substantially flat end portions 15 having vertically offset holes 16, 17 for receiving respective pivot pins 18, 19 associated with the ends 3, 4; 3', 4' of the sections 5, 6 and allowing the latter to pivot.

Namely, the flat end portions 15 may comprise an upper pair 16 and a lower pair 17 of transversely aligned holes.

The sections 5, 6 may comprise a tubular section 5 with a longitudinal cavity 20 and a downwardly open section 6 for at least partially covering the tubular section 5.

The downwardly open section 6, as best shown in FIG. 4, may comprise transverse through holes 21 at its ends 3, 4, and the latter may be fitted into the brackets 13 of the supports 7, 8 against the tubular bodies 10.

As the ends 3', 4' of the section 6 are fitted into the corresponding brackets 13, their transverse through holes 21 may be aligned with the holes of the upper pair 16 of the U-shaped brackets 13 and a respective first pivot pin 18 may be introduced therein to allow the section 6 to pivot.

Furthermore, the pivot pins 18, 19 may be equipped with antifriction bushings 22 that are fitted into respective holes 16, 17 of the brackets 13.

For example, the tubular section 5 comprises respective bushings 22 secured at its longitudinal ends 3, 4 and adapted to be aligned with the holes of the lower pairs 17 of the brackets 13 for receiving respective second pivot pins 19.

Conveniently, the arm 1 comprises a gas spring 23, which is housed in the frame 2, preferably inside the downwardly open section 5, 6, and is interposed between the sections 5, 6 and the supports 7, 8 to at least partially balance the weight of the control panel C and assist in lifting the arm 1.

The spring 23 is of conventional type and comprises one end 24 pivoted to the tubular section 5 and one end 25 pivoted to the downwardly open section 6. Advantageously, the spring 23 can be preset for the arm 1 to withstand loads C having a predetermined weight.

Furthermore, one of the two pivot pins 18 as described above, preferably the first pivot pin, may serve as a fulcrum for the end 25 of the spring 23 that is pivoted to the downwardly open section 6 at one of the longitudinal ends 4' of the latter.

According to a peculiar aspect of the invention, the arm 1 comprises an electromechanical actuator 26 with respective ends 27, 28 connected to the sections 5, 6.

The actuator 26 can control the pivotal movement of the arm about the pivot points of the four-bar linkage 9 and cause it to be lifted or lowered from the operating configuration of FIG. 2 to that of FIG. 3 and vice versa.

Furthermore, remote control means, not shown, are provided, which can be actuated by an operator to control the lifting and lowering movements of the arm 1 in order to selectively position the control panel C relative to the machine M.

The electromechanical actuator 26 ensures constant smooth and accurate movement over time, and allows the arm 1 to also support control panels C having different weights and sizes.

The electromechanical actuator may comprise a tubular sleeve 29 having one end 28 pivoted to the tubular section 5 and a stem 30 that slides in the sleeve 29 and has a free end 27 pivoted to the downwardly open section 6.

Namely, the actuator 26 may be pivoted to the downwardly open section 6 by means of a third pivot pin 31 that can be fitted into its free end 28 and into corresponding through holes 32 formed in the section 6 in an intermediate position.

Advantageously, the ends 27, 24 of the sleeve 26 and the gas spring 23 may be pivoted to the tubular section 5 by means of respective supports 33 comprising a respective pivot pin 34 and a base 35 that is welded to the outer wall 36 of the tubular section 5.

Advantageously, first electrical connection means 37 may be provided for power supply to the actuator 26 and for connection to control means, and second electrical connection means 38 may be provided for connection of the control panel C to the machine M.

As shown in the figures, the first 37 and second 38 connection means may be housed within the tubular section 5 in the longitudinal cavity 20, and each of the tubular bodies 10 may be designed to receive them.

Particularly, the connection means 37, 38 will comprise a plurality of electric cables and each tubular body 10 may comprise a respective substantially circular opening 39 which is longitudinally aligned, in operation, with the cavity 20 of the tubular profile 5 for receiving the cables.

The above disclosure clearly shows that the joint of the invention fulfills the intended objects and can particularly afford a safe, failure-free transfer of high driving or resistant torques.

The joint of the invention is susceptible of a number of changes and variants, within the inventive concept disclosed in the appended claims.

All the details thereof may be replaced by other technically equivalent parts, and the materials may vary depending on different needs, without departure from the scope of the invention.

While the joint has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories operating in the field of mechanical coupling systems.

## Claims

1. An articulated support arm (1) for machines or industrial and/or sanitary apparatuses, comprising:
- an elongate frame (2) having longitudinal ends (3, 4) adapted to be coupled to a machine (M) and to a control panel (C) respectively, wherein said frame (2) comprises:
- a pair of substantially parallel sections (5, 6), articulated to respective end supports (7, 8) at pivot points (P₁, P₂) to define a four-bar linkage (9);
- a swivel joint (9') fixed to one end (11) of each of said end supports (7, 8);
- a gas spring (23) having opposite ends (24, 25), which is housed in said frame (2) and is interposed between said sections (5, 6) and said supports (7, 8) to at least partially balance the weight of the control panel (C) and assist in lifting the arm (1);
- an electromechanical actuator (26) having opposite ends (27, 28);
- control means for a user to control the lifting and lowering movements of the arm (1);
wherein each of said end supports (7, 8) is adapted to be connected to the machine (M) and to the control panel (C) by means of a respective swivel joint (9');
**characterized in that** it comprises first electrical connection means (37) for power supply to said actuator (26) and for connection to said control means, and second electrical connection means (38) for connection of the control panel (C) to the machine (M), one of said sections (5) having a substantially tubular shape with a longitudinal internal cavity (20) for the passage of said first (37) and said second (38) electrical connection means, the other of said sections (6) being downwardly open for at least partially covering said tubular section (5), said electromechanical actuator (26) and said gas spring (23) having one end (28, 24) connected to said section (5) having tubular shape and the other end (27, 25) connected to said other parallel section (6) downwardly open to control the pivotal movement thereof about said pivot points (P₁, P₂).

2. Arm as claimed in claim 1, **characterized in that** said actuator comprises a tubular sleeve (29) having one end (28) pivoted to said tubular section (5) and a stem (30) that slides in said sleeve (29) and has a free end (27) pivoted to said downwardly open section (6).

3. Arm as claimed in claim 1, **characterized in that** each of said end supports (7, 8) comprises a tubular body (10) with a U-shaped bracket (13) partially encircling and fixed to it, and having vertically offset holes (16, 17) to allow said sections (5, 6) to pivot.

4. Arm as claimed in claim 3, **characterized in that** said U-shaped bracket (13) has substantially flat end portions (15) with said pivot holes (16, 17) for receiving respective pivot pins (18, 19), that are fitted into the ends (3, 4; 3', 4') of said sections (5, 6).

5. Arm as claimed in claim 4, **characterized in that** one of said pivot pins (18) also serves as fulcrum for one end (25) of said gas spring (23).

6. Arm as claimed in claim 1, **characterized in that** said pivot pins (18, 19) are equipped with antifriction bushings (22) which are fitted into respective holes (17) of said bracket (13).

7. Arm as claimed in claim 3, **characterized in that** each of said tubular bodies (10) is designed to receive said first (37) and second (38) electrical connection means.

## Patentansprüche

1. Ein Gelenk-Stützarm (1) für Maschinen oder industrielle und/oder sanitäre Einrichtungen, umfassend:
- ein länglicher Rahmen (2) mit Längsenden (3, 4), die jeweils mit einer Maschine (M) und einem Bedienfeld (C) gekoppelt werden können, wobei der Rahmen (2) umfasst:
- ein Paar von im Wesentlichen parallelen Abschnitten (5, 6), die an den jeweiligen Endstützen (7, 8) an Drehpunkten (P₁, P₂) angelenkt sind, um eine Viergelenkverbindung (9) zu bilden;
- einen Drehpunkt (9'), der an einem Ende (11) jeder der Endstützen (7, 8) befestigt ist;
- eine Gasfeder (23) mit gegenüberliegenden Enden (24, 25), die in dem Rahmen (2) untergebracht ist und zwischen den Abschnitten (5, 6) und den Endstützen (7, 8) angeordnet ist, um das Gewicht des Bedienfelds (C) zumindest teilweise auszugleichen und um das Anheben des Arms (1) zu unterstützen;
- einen elektromechanischen Stellantrieb (26) mit entgegengesetzten Enden (27, 28);
- Steuermittel für einen Benutzer zum Steuern der Hub- und Senkbewegungen des Arms (1);
wobei jede der Endstützen (7, 8) mit der Maschine (M) und dem Bedienfeld (C) mittels eines jeweiligen Drehgelenks (9') verbunden werden kann;
***dadurch gekennzeichnet,* dass** er erste elektrische Verbindungsmittel (37) zur Stromversorgung des Aktuators (26) und zum Verbinden mit den Steuermitteln, und zweite elektrische Verbindungsmittel (38) zum Verbinden des Bedienfelds (C) mit der Maschine (M) aufweist, wobei einer der Abschnitte (5) eine im Wesentlichen röhrenförmige Form mit einem länglichen inneren Hohlraum (20) für den Durchgang der ersten (37) und der zweiten (38) elektrischen Verbindungsmitteln aufweist, der andere der Abschnitte (6) nach unten offen ist, um den röhrenförmigen Abschnitt (5) zumindest teilweise abzudecken, wobei der elektromechanische Stellantrieb (26) und die Gasfeder (23) ein Ende (28, 24) haben, das mit dem röhrenförmigen Abschnitt (5) verbunden ist und das andere Ende (27, 25) mit dem anderen parallelen, nach unten offenen, Abschnitt (6) verbunden ist, um deren Schwenkbewegung um die Schwenkpunkte (P₁, P₂) zu steuern.

2. Arm nach Anspruch 1, **dadurch gekennzeichnet, dass** der Stellantrieb (26) eine röhrenförmige Hülle (29), deren eines Ende (28) an dem röhrenförmigen Abschnitt (5) angelenkt ist, und einen Stiel (30), der in der Hülle (29) gleitet, aufweist, wobei die Hülle (29) ein freies Ende (27) hat, das drehbar an dem nach unten offenen Abschnitt (6) ist.

3. Arm nach Anspruch 1, **dadurch gekennzeichnet, dass** jede der Endstützen (7, 8) einen rohrförmigen Körper (10) mit einem U-förmigen Bügel (13) umfasst, der ihn teilweise umgibt und daran befestigt ist, und der vertikal versetzte Schwenklöcher (16,17) aufweist, damit sich die Abschnitte (5, 6) schwenken können.

4. Arm nach Anspruch 3, **dadurch gekennzeichnet, dass** der U-förmige Bügel (13) im Wesentlichen flache Endabschnitte (15) aufweist, wobei die Schwenklöcher (16, 17) zur Aufnahme entsprechender Schwenkstifte (18, 19) vorgesehen sind, die in den Enden (3, 4, 3', 4') der Abschnitte (5, 6) eingepasst sind.

5. Arm nach Anspruch 4, **dadurch gekennzeichnet, dass** einer der Schwenkstifte (18) auch als Drehpunkt für ein Ende (25) der Gasfeder (23) dient.

6. Arm nach Anspruch 1, **dadurch gekennzeichnet, dass** die Schwenkstifte (18, 19) mit Wälzlagerbuchsen (22) ausgestattet sind, die in jeweilige Löcher (17) des Bügels (13) eingepasst sind.

7. Arm nach Anspruch 3, **dadurch gekennzeichnet, dass** jeder der rohrförmigen Körper (10) zur Aufnahme des ersten (37) und des zweiten (38) elektrischen Verbindungsmittel ausgebildet ist.

## Revendications

1. Bras de support articulé (1) pour machines ou appareils industriels et/ou sanitaires, comprenant:
- un cadre allongé (2) ayant des extrémités longitudinales (3, 4) adaptées pour être couplées à une machine (M) et à un panneau de commande (C) respectivement, dans lequel ledit cadre (2) comprend:
- une paire de sections sensiblement parallèles (5, 6), articulées aux respectifs supports d'extrémité (7, 8) en des points de pivotement (P₁, P₂) pour définir une liaison à quatre barres (9);
- un point pivot (9 ') fixé à une extrémité (11) de chacun desdits supports d'extrémité (7, 8);
- un ressort à gaz (23) ayant des extrémités opposées (24, 25) qui est logé dans ledit cadre (2) et qui est interposé entre lesdites sections (5, 6) et lesdits supports (7, 8) pour équilibrer au moins partiellement le poids du panneau de commande (C) et aide à soulever le bras (1);
- un actionneur électromécanique (26) ayant des extrémités opposées (27, 28);
- des moyens de commande pour un utilisateur pour contrôler les mouvements de levage et d'abaissement du bras (1);
dans lequel chacun desdits supports (7, 8) est adapté pour être connecté à la machine (M) et au panneau de commande (C) au moyen d'un respectif joint pivotant (9');
***caractérisé* en ce qu'**il comprend un premier moyen de connexion électrique (37) pour alimenter en énergie ledit actionneur (26) et pour être connecté audit moyen de commande, et un second moyen de connexion électrique (38) pour connecter le panneau de commande (C) à la machine (M), l'une desdites sections (5) ayant une forme sensiblement tubulaire avec une cavité interne longitudinale (20) pour le passage dudit premier moyen (37) et dudit second moyen (38) de connexion électrique, l'autre desdites sections (6) étant ouvert vers le bas pour recouvrir au moins partiellement ladite section tubulaire (5), ledit actionneur électromécanique (26) et ledit ressort à gaz (23) ayant une extrémité (28, 24) reliée à ladite section (5) ayant une forme tubulaire et l'autre extrémité (27, 25) connecté à ladite autre section parallèle (6), qui est ouverte vers le bas, pour contrôler son mouvement de pivotement autour desdits points de pivotement (P₁, P₂).

2. Bras selon la revendication 1, **caractérisé en ce que** ledit actionneur (26) comprend un manchon tubulaire (29) ayant une extrémité (28) montée de manière pivotante sur ladite section tubulaire (5) et une tige (30) coulissant dans ledit manchon (29) et ayant une extrémité libre (27) articulée de manière pivotante sur ladite section ouverte vers le bas (6).

3. Bras selon la revendication 1, **caractérisé en ce que** chacun desdits supports d'extrémité (7, 8) comprend un corps tubulaire (10) avec un support en forme de U (13) l'entourant partiellement et fixé à celui-ci, et ayant des trous décalés verticalement (16, 17) pour permettre auxdites sections (5, 6) de pivoter.

4. Bras selon la revendication 3, **caractérisé en ce que** ledit support en forme de U (13) comporte des parties d'extrémité sensiblement plates (15) avec lesdits trous de pivotement (16, 17) pour recevoir respectives goupilles de pivotement (18, 19), qui sont ajustés dans les extrémités (3, 4, 3', 4') desdites sections (5,6).

5. Bras selon la revendication 4, **caractérisé en ce que** l'une desdites goupilles de pivotement (18) sert également de point de pivotement pour une extrémité (25) dudit ressort à gaz (23).

6. Bras selon la revendication 1, **caractérisé en ce que** lesdites goupilles de pivotement (18, 19) sont équipées de bagues anti-friction (22) qui sont montées dans des trous respectifs (17) dudit support en forme de U (13).

7. Bras selon la revendication 3, **caractérisé en ce que** chacun desdits corps tubulaires (10) est conçu pour recevoir lesdits premier (37) et second (38) moyens de connexion électrique.
